(19) Europäisches Patentamt
European Patent Office
Office européen des brevets

(11) Veröffentlichungsnummer : **0 110 076**
**B1**

# (12) EUROPÄISCHE PATENTSCHRIFT

(45) Veröffentlichungstag der Patentschrift : **05.03.86**

(51) Int. Cl.⁴ : **C 09 B 45/28**, D 06 P 1/10

(21) Anmeldenummer : **83110199.3**

(22) Anmeldetag : **13.10.83**

## (54) Verwendung von Disazo-Kupferkomplexfarbstoffen zum Färben von natürlichen und synthetischen Materialien.

(30) Priorität : **26.10.82 DE 3239509**

(43) Veröffentlichungstag der Anmeldung : **13.06.84 Patentblatt 84/24**

(45) Bekanntmachung des Hinweises auf die Patenterteilung : **05.03.86 Patentblatt 86/10**

(84) Benannte Vertragsstaaten : **DE FR IT**

(56) Entgegenhaltungen :
**BE-A- 506 981**
**BE-A- 529 889**
**FR-A- 1 161 475**
**GB-A- 352 956**
**US-A- 2 620 331**

(73) Patentinhaber : **BAYER AG**
**Konzernverwaltung RP Patentabteilung**
**D-5090 Leverkusen 1 Bayerwerk (DE)**

(72) Erfinder : **Michna, Martin, Dr.**
**Silesiusstrasse 74**
**D-5000 Köln 80 (DE)**
Erfinder : **Henk, Hermann, Dr.**
**Roggendorfstrasse 55**
**D-5000 Köln 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 110 076 B1

Jouve, 18, rue St-Denis, 75001 Paris, France

**Beschreibung**

Gegenstand der vorliegenden Erfindung ist die Verwendung der Monokupferkomplexe (I) von Farbstoffen der Formel

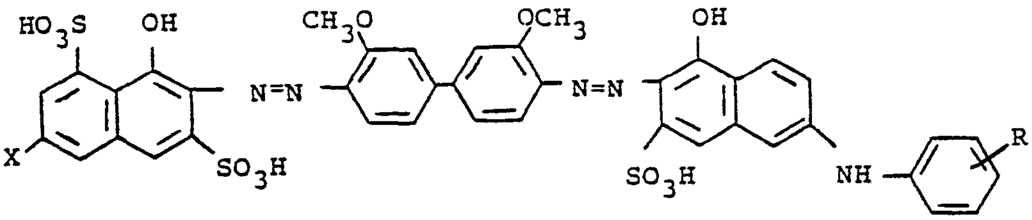

(II)

worin

$X = H$ oder $SO_3H$,

$R = H$, $C_1$-$C_4$-Alkyl, $C_1$-$C_4$-Alkoxy, Carboxy, Halogen, Sulfo, bzw. deren Mischungen mit den Bis-Kupferkomplexen (III) der Farbstoffe der Formel (II) zum Färben von natürlichen und synthetischen Materialien, insbesondere Fasermaterialien, vorzugsweise solchen aus Cellulose wie Baumwolle oder Papier sowie Leder, Wolle und Polyamid, wobei die Gesamt-Mischungen bis zu 50 Gew.-% (III) enthalten können.

Bevorzugte Mischungen enthalten 1-30, insbesondere 3-25 Gew.-% (III) und bestehen aus Farbstoffen in denen X die gleiche Bedeutung hat.

Die Monokupferkomplexe (I) bzw. deren Mischungen mit den Bis-Kupferkomplexen (III) erhält man in an sich bekannter Weise durch Kupferung der in üblicher Weise hergestellten Farbstoffe (II) mit kupferabgebenden Mitteln in Mengen von 1-1,5 Mol pro Mol (II).

Die Farbstoffe liefern nach üblichen Färbeverfahren auf den obengenannten Materialien blaue Färbungen mit guten Echtheiten.

In der US-Patentschrift 2,620,331 und der Belgischen Patentschrift 529,889 werden Bis-Kupferkomplexe von Farbstoffen der Formel (II) sowie deren Verwendung zum Färben von Baumwolle und Regeneratcellulose beschrieben.

Beispiel 1

1 Mol des Farbstoffs II, (X = H) wird wie üblich hergestellt. Die nach der Kupplung erhaltene wäßrige Suspension wird mit einer Lösung von 1,2 Mol Kupfersulfat-Pentahydrat, 350 ml Ethanolamin, 1,3 l Wasser versetzt und 4-10 Stunden auf 100 °C erhitzt. Das erhaltene Farbstoffgemisch aus (I) und (III) wird ausgesalzen, abfiltriert und getrocknet.

Man erhält ein dunkelblaues Pulver welches auf Baumwolle marineblaue Färbungen mit guten Echtheiten liefert. Ähnlich gute Färbungen erhält man bei Verwendung von 1,01 bzw. 1,3 Mol Kupfersulfat-Pentahydrat.

Beispiel 2

1 Mol der wäßrigen Suspension des Farbstoffs II, $X = SO_3H$ wie sie nach der Kupplung erhalten wird, wird mit einer Lösung aus 1,2 Mol Kupfersulfat-Pentahydrat, 350 ml Mono-Ethanolamin, 1,5 l Wasser versetzt und 5-10 Stunden auf ca. 100 °C erhitzt. Das erhaltene Gemisch der Farbstoffe (I) und (III) wird ausgesalzen, abfiltriert und getrocknet.

Man erhält ein dunkelblaues Pulver welches auf Baumwolle marineblaue Färbungen mit guten Echtheiten liefert. Ähnlich gute Färbungen erhält man bei Verwendung von 1,01 bzw. 1,3 Mol Kupfersulfat-Pentahydrat.

**Patentansprüche**

1. Verwendung der Monokupferkomplexe (I) von Farbstoffen der Formel

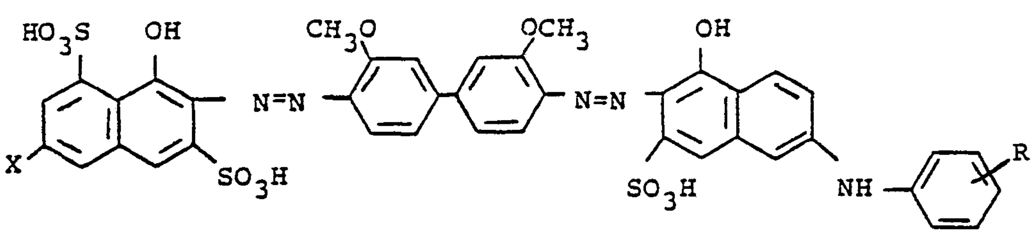

(II)

worin

X = H oder $SO_3H$

R = H, $C_1$-$C_4$-Alkyl, $C_1$-$C_4$-Alkoxy, Carboxy, Halogen, Sulfo

bzw. deren Mischungen mit den Bis-Kupferkomplexen (III) der Farbstoffe der Formel (II) zum Färben von natürlichen und synthetischen Materialien, insbesondere Fasermaterialien, vorzugsweise solchen aus Cellulose wie Baumwolle oder Papier, sowie Leder, Wolle und Polyamid, wobei die Gesamt-Mischungen bis zu 50 Gew.-% (III) enthalten können.

2. Verwendung von Mischungen gemäß Anspruch 1, die 1-30, insbesondere 3-25 Gew.-% an Farbstoffen (III) enthalten, wobei X jeweils gleiche Bedeutung hat.

**Claims**

1. Use of the mono-copper complexes (I) of dyestuffs of the formula (II)

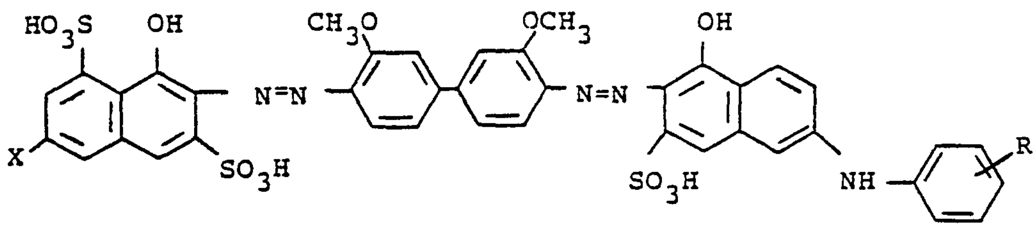

(II)

wherein

X is H or $SO_3H$ and

R is H, $C_1$-$C_4$-alkyl, $C_1$-$C_4$-alkoxy, carboxyl, halogen or sulpho,

and of mixtures thereof with the bis-copper complexes (III) of the dyestuffs of the formula (II), for dyeing natural and synthetic materials, in particular fibre materials, preferably those of cellulose, such as cotton or paper, and leather, wool and polyamide, it being possible for the total mixtures to contain up to 50 % by weigth of (III).

2. Use of mixtures according to Claim 1, which contain 1-30, in particular 3-25 % by weight, of dyestuffs (III), X in each case having the same meaning.

**Revendications**

1. Utilisation des mono-complexes cuivriques (I) de colorants de formule

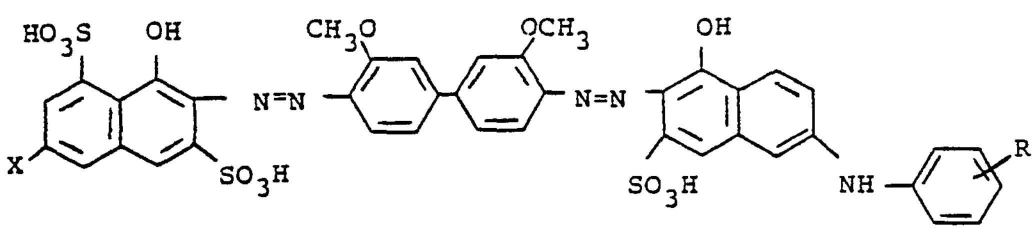

(II)

dans laquelle

X est H ou un groupe $SO_3H$,

R est H ou un halogène ou un groupe alkyle en $C_1$-$C_4$, alcoxy en $C_1$-$C_4$, carboxy ou sulfo,

ou leur mélange avec les bis-complexes cuivriques (III) des colorants de formule (II) pour la teinture de matières naturelles et synthétiques, en particulier de matières fibreuses, de préférence celles en cellulose telles que le coton ou le papier, ainsi que le cuir, la laine et les polyamides, les mélanges totaux pouvant contenir jusqu'à 50 % en poids de (III).

2. Utilisation des mélanges selon la revendication 1, caractérisée en ce que lesdits mélanges contiennent 1-30 % en poids, en particulier 3-25 % en poids, de colorants (III) dans lesquels X a chaque fois la même signification.